# EUROPEAN PATENT SPECIFICATION

(11) **EP 1 070 022 B1**
(45) Date of publication and mention of the grant of the patent: **13.11.2002**
(21) Application number: 99911639.5
(22) Date of filing: 30.03.1999
(51) Int. Cl.: C02F 1/74, C02F 3/02

(54) **A DEVICE FOR THE TREATMENT OF WATER**
VORRICHTUNG ZUR BEHANDLUNG VON WASSER
DISPOSITIF POUR LE TRAITEMENT DE L'EAU

(30) Priority: 01.04.1998 DK 45998
(43) Date of publication of application: 24.01.2001
(73) Proprietor: Unicon Beton Holding A/S, 4000 Roskilde (DK)
(72) Inventor: LEBECH, Finn, DK-4000 Roskilde (DK)
(74) Representative: Sundien, Thomas
(86) International application number: DK9900186
(87) International publication number: WO99052829

(56) References cited:
- DE-A1- 3 818 650
- DK-B1- 168 684
- GB-A- 2 241 697
- US-A- 4 562 015

## Description

In connection with the treatment of water, the crude water is aerated according to the prior art to add to the water a greater content of oxygen which contributes to the conversion of iron and manganese bicarbonate into sparingly soluble compounds, ferrous hydroxide and pyrolusite and causes separation of CO₂, hydrogen sulphide and methane. According to the prior art, the aeration takes place e.g. in that the water is introduced over a perforated tray and drops freely from there as drops toward a basin, or in that the water flows down over oxidation steps.

These known methods have some effect on the water in respect of achieving the intended result, as described above. However, in many cases this treatment is not sufficient. In many cases the insufficiency is caused by an ever poorer crude water quality with a larger content of harmful substances, which must be removed, e.g. by aeration.

Accordingly, the object of the present invention is to provide an apparatus by means of which crude water may be treated to achieve a satisfactory water quality with respect to content of components which can be removed or at least reduced by aeration.

According to the invention, drops are initially formed from an introduced water amount and the formed drops are divided by mechanical action to form microdrops.

Such a formation of microdrops results in a considerably larger surface of the drops relative to the volume of the drops, and improved oxidation can thus take place. The mechanical action ensures that the intended division takes place. It has been found that a division of 50-60 times or optionally more causes formation of drops of a size which is sufficiently small for a satisfactory oxidation to take place, and thereby for a satisfactory water quality to be obtained.

According to an expedient embodiment, a microorganism culture may additionally be added to the water prior to the initiating drop formation. Hereby, components of the crude water which are not converted by the oxidation alone, may moreover be removed or reduced by the metabolism of the microorganisms. In this connection, the concrete microorganism culture may be selected depending on the crude water content of components whose amount is to be reduced.

Particularly expediently, the formed microdrops are introduced into a sedimentation container after completed oxidation. After settling in such a container the water may be conveyed to the user.

The apparatus of the invention comprises a plate with holes for forming drops by the flow of the water through these holes at the initiation of the process, and, in the direction of the gravitational force below these means, additional means for causing division of the drops by contact with these.

The means for causing division of the drops comprise wire-shaped elements mutually spaced in the direction of the gravitational force. The wire-shaped elements are hereby arranged in a mutually intersecting pattern. Such a structure involves a good certainty of drop division, and it has moreover been found by tests that good environmental conditions are hereby formed for an optionally added microorganism culture. At least 50-60 layers of the mutually spaced wire-shaped elements are preferably arranged in the direction of the gravitational force to obtain an expedient fine division of the drops, as described above. Preferably, however, more of these layers are arranged so that also the drops which statistically drop through a layer in a gap between two wire-shaped elements, will obtain a division of 50-60 times. Thus, 70-80 layers of wire-shaped elements are expediently arranged. In this connection, the mutual spacing between parallel or substantially parallel wire-shaped elements in the same layer is expediently between 5 and 15 mm, preferably about 10 mm. The spacing between the wires in the same layer will affect the statistical fall of drops, which are thus not divided as there is no contact. A too small spacing between the wires may cause gathering of already divided drops.

The mutual spacing between the layers of wire-shaped elements is preferably 30-60 mm, and more preferably 40-50 mm. This ensures that sufficient kinetic energy is added to the drops for rotation to take place, while ensuring that a complete system still has a limited height.

It has been found expedient to build such a system of tubular elements with an interlaced structure. In this connection, a row of such pipes are placed side by side to form a pipe layer. A plurality of such pipe layers are stacked to form a pipe column. Each pipe layer thus forms two layers of wire-shaped elements mutually spaced, except in the pipe areas adjoining each other in the same layer. In this connection, the pipe layers are expediently arranged with the pipe axes rotated 90 degrees relative to overlying and underlying pipe layers. This has been found to give a particularly good result, and at the same time an increased mechanical stability is achieved.

Preferably, means are arranged in the apparatus for collecting the microdrops below the means for dividing the drops. The drops or the caught drops, which form an amount of water, are expediently introduced into a settling container, which forms part of the apparatus in this connection.

The invention will be explained more fully below with reference to the drawing, in which a preferred embodiment of the invention is shown schematically, and in which
fig. 1 shows an apparatus, seen from the side,
fig. 2 shows an apparatus, seen from above, and
fig. 3 shows a pipe element associated with the apparatus shown in figs. 1 and 2, and
fig. 4 shows four interconnected pipe elements, as shown in fig. 3 and seen from the end.

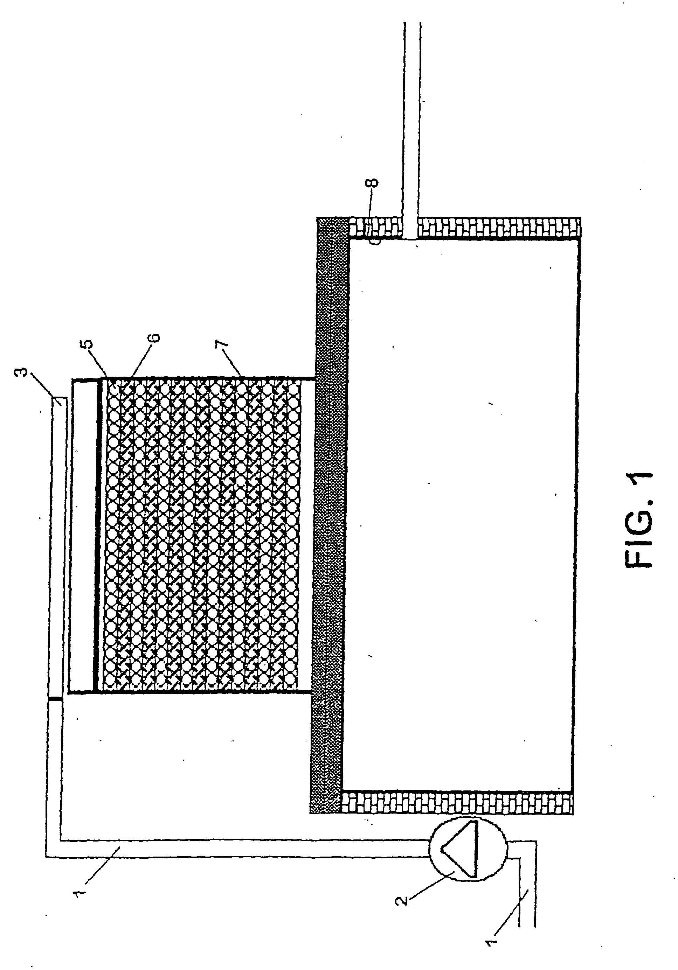

Fig. 1 illustrates a system which uses apparatuses according to the invention for performing the method according to the invention. Such a system comprises a pipe connection 1 from a bore well and a pump 2 for pumping the water from the bore well. The crude water is conveyed via the pipe 1 to a distribution system consisting of a plate 3 with holes 4. This plate 3 with holes 4 serves to initiate formation of drops. Relatively large drops are involved in this connection. The drops leaving the plate 3 through the holes 4 in it then fall down under the action of gravity and hereby contact rows of wire-shaped elements, which, in the example shown, are formed by tubular elements 5, 6 arranged side by side with horizontal pipe axes to form pipe layers, a plurality of such pipe layers being arranged on top of each other. The pipe layers are arranged such that every second pipe layer 6 is rotated 90°. In the structure shown, 15 pipe layers are provided. In this constellation, in the event that a large content of components is to be reduced, it will be necessary to recirculate the water to achieve sufficient oxidation. As also mentioned in the preamble to the description, 30-40 pipe layers will expediently be provided. The pipe layers are arranged in a housing 7 which is open at the top and at the bottom. When the water drops leave the lowermost pipe layer at the lower end of the housing 7, the water is collected in a collection basin or a settling container 8, in which solids, if any, can precipitate, and from which the cleaned water may be discharged and transported to the place of use.

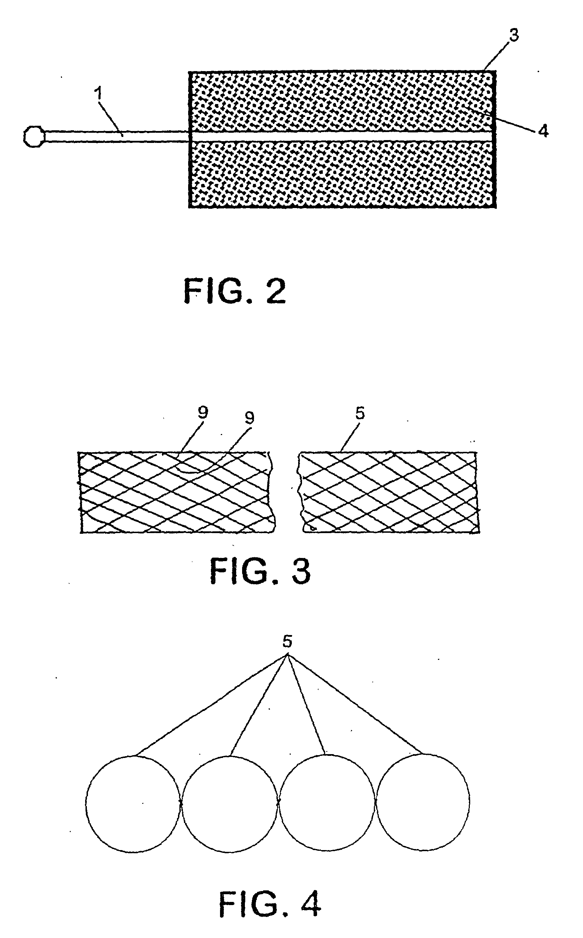

Fig. 2 shows the plate 3 more clearly seen from above. In this connection, the holes 4 have a diameter of about 1-2 mm. This diameter may be selected depending on the surface tension of the water, the water pressure, etc.

Fig. 3 shows a pipe element which is used for the construction of the pipe layers in the housing. The pipe layers are composed of wire-shaped elements 9 which are arranged in intersecting manner in the pipe wall. By their mutually intersecting pattern, the wire-shaped elements 9 form rhomboid holes in the pipe wall. Fig. 4 shows four such pipe elements in an interconnected state. It appears that circular pipe elements 5 are involved.

## Claims

1. An apparatus for treatment of water comprising:
a plate (3) formed with holes for forming drops by flow of the water through the holes at the initiation of the treatment process, and
means (5,6) arranged below said plate (3) for causing division of the drops by contact therewith,
**characterized in that** the means for causing division of the drops comprise layers of mutually intersecting wire-shaped element (5,6), said layers being mutually spaced in the direction of the gravitational force, said mutually intersecting wire-shaped elements being arranged so as to form tubular elements (5,6), a plurality of said tubular elements being arranged horizontally side by side and on top of each other.

2. An apparatus according to claim 1, **characterized in that** in every second layer (6) the tubular elements (6) extend in a direction perpendicular to the orientation of the tubular elements of adjacent layers.

3. An apparatus according to claims 1 or 2, **characterized in that** at least 50-60 layers of mutually spaced layers of mutually intersecting wire-shaped elements are arranged in the direction of gravitational force.

4. An apparatus according to claims 1, 2 or 3, **characterized in that** the mutual spacing between the layers of wire-shaped elements is 30-60 mm, preferably 40-50 mm.

5. An apparatus according to any of claims 1-4, **characterized in that** means are provided for collecting the microdrops below the means for dividing the drops.

6. An apparatus according to any of claims 1-5, **characterized by** comprising a settling container.

7. The use of an apparatus according to any of claims 1-6, **characterized in that** a microorganism culture is added to the water prior to the initiating drop formation.

## Patentansprüche

1. Vorrichtung zur Wasseraufbereitung mit:
einer Platte (3) mit Löchern, mit der Tropfen dadurch gebildet werden, dass das Wasser zu Beginn des Aufbereitungsprozesses durch die Löcher fließt, und
einer unterhalb der Platte (3) angeordneten Einrichtung (5,6), die durch Kontakt mit den Tropfen eine Teilung der Tropfen bewirkt,
**dadurch gekennzeichnet, dass**
die Einrichtung zum Bewirken einer Teilung der Tropfen Schichten sich überschneidender drahtförmiger Elemente (5,6) aufweist, wobei die Schichten in Richtung der Schwerkraft voneinander beabstandet sind, die sich überschneidenden drahtförmigen Elemente derart angeordnet sind, dass sie rohrförmige Elemente (5,6) bilden, und die mehreren rohrförmigen Elemente horizontal nebeneinander und übereinander angeordnet sind.

2. Vorrichtung nach Anspruch 1, **dadurch gekennzeichnet, dass** in jeder zweiten Schicht (6) die rohrförmigen Elemente (6) rechtwinklig zu der Ausrichtung der rohrförmigen Elemente benachbarter Schichten verlaufen.

3. Vorrichtung nach Anspruch 1 oder 2, **dadurch gekennzeichnet, dass** mindestens 50-60 Schichten voneinander beabstandeter Schichten sich überschneidender drahtförmiger Elemente in Richtung der Schwerkraft ausgerichtet sind.

4. Vorrichtung nach Anspruch 1, 2 oder 3, **dadurch gekennzeichnet, dass** die Beabstandung zwischen den Schichten drahtförmiger Elemente 30-60 mm, vorzugsweise 40-50 mm beträgt.

5. Vorrichtung nach einem der Ansprüche 1-4, **dadurch gekennzeichnet, dass** Einrichtungen zum Auffangen der Mikrotropfen unterhalb der Einrichtung zum Separieren der Tropfen vorgesehen sind.

6. Vorrichtung nach einem der Ansprüche 1-5, **dadurch gekennzeichnet, dass** ein Absetzbehälter vorgesehen ist.

7. Verwendung einer Vorrichtung nach einem der Ansprüche 1-6, **dadurch gekennzeichnet, dass** dem Wasser vor Beginn der Tropfenbildung eine Mikroorganismenkultur zugegeben wird.

## Revendications

1. Dispositif de traitement d'eau comprenant :
une plaque (3) munie de trous en vue de former des gouttes par écoulement de l'eau à travers des trous au commencement du processus de traitement, et
des moyens (5, 6) agencés en dessous de ladite plaque (3) en vue de provoquer une division des gouttes par contact avec ceux-ci,
**caractérisé en ce que** les moyens comprennent en vue de provoquer une division des gouttes, des couches d'éléments en forme de fil s'entrecroisant mutuellement (5, 6), lesdites couches étant mutuellement espacées dans la direction de la force de la pesanteur, lesdits éléments en forme de fil s'entrecroisant mutuellement étant agencés de façon à former des éléments tubulaires (5, 6), une pluralité desdits éléments tubulaires étant agencés horizontalement côte-à-côte et les uns au-dessus des autres.

2. Dispositif selon la revendication 1, **caractérisé en ce que** dans une couche sur deux (6), les éléments tubulaires (6) s'étendent dans une perpendiculaire à l'orientation des éléments tubulaires des couches adjacentes.

3. Dispositif selon les revendications 1 ou 2, **caractérisé en ce qu'**au moins 50 à 60 couches de couches mutuellement espacées d'éléments en forme de fil s'entrecroisant mutuellement sont agencées dans la direction de la force de la pesanteur.

4. Dispositif selon les revendications 1, 2 ou 3, **caractérisé en ce que** l'espacement mutuel entre les couches d'éléments en forme de fil est de 30 à 60 mm, de préférence de 40 à 50 mm.

5. Dispositif selon l'une quelconque des revendications 1 à 4, **caractérisé en ce que** les moyens sont prévus en vue de recueillir les micro-gouttes en dessous des moyens destinés à diviser les gouttes.

6. Dispositif selon l'une quelconque des revendications 1 à 5, **caractérisé en ce qu'**il comprend un réservoir de décantation.

7. Utilisation d'un dispositif selon l'une quelconque des revendications 1 à 6, **caractérisé en ce qu'**une culture de micro-organismes est ajoutée à l'eau avant le commencement de la formation de gouttes.
